# EUROPEAN PATENT SPECIFICATION

(11) **EP 2 602 980 B1**
(45) Date of publication and mention of the grant of the patent: **15.02.2017**
(21) Application number: 11192827.1
(22) Date of filing: 09.12.2011
(51) Int. Cl.: H04M 1/725, H04L 29/06, H04W 12/06

(54) **TRANSACTION PROVISIONING FOR MOBILE WIRELESS COMMUNICATIONS DEVICES AND RELATED METHODS**
TRANSAKTIONSBEREITSTELLUNG FÜR MOBILE DRAHTLOSE KOMMUNIKATIONSVORRICHTUNGEN UND ZUGEHÖRIGE VERFAHREN
FOURNITURE DE TRANSACTIONS DANS DES DISPOSITIFS DE COMMUNICATION SANS FIL MOBILES ET PROCÉDÉS CORRESPONDANTS

(43) Date of publication of application: 12.06.2013
(73) Proprietor: BlackBerry Limited, Waterloo, ON N2K 0A7 (CA)
(72) Inventor: Singh, Ravi, Mississauga Ontario L4W 0B5 (CA); Adams, Neil Patrick, Waterloo Ontario N2L 3W8 (CA)
(74) Representative: Gill Jennings & Every LLP

(56) References cited:
- EP-A1- 2 159 763
- US-A1- 2005 105 734
- US-A1- 2008 058 014
- US-A1- 2010 058 463
- US-A1- 2010 088 227

## Description

### Technical Field

This application relates to the field of communications, and more particularly, to mobile wireless communications systems and related methods.

### Background

Mobile communication systems continue to grow in popularity and have become an integral part of both personal and business communications. Various mobile devices now incorporate Personal Digital Assistant (PDA) features such as calendars, address books, task lists, calculators, memo and writing programs, media players, games, etc. These multi-function devices usually allow electronic mail (email) messages to be sent and received wirelessly, as well as access the internet via a cellular network and/or a wireless local area network (WLAN), for example.

Some mobile devices incorporate contactless card technology and/or near field communication (NFC) chips. NFC technology is commonly used for contactless short-range communications based on radio frequency identification (RFID) standards, using magnetic field induction to enable communication between electronic devices, including mobile wireless communications devices. This short-range high frequency wireless communications technology exchanges data between devices over a short distance, such as only a few centimeters.

US 2010/058463 discloses a method of exchanging data between a first electronic entity and a second electronic entity. The method includes initiating communication between the first electronic entity and the second electronic entity subsequently to bringing the first and second electronic entities closer together. In consequence of the initiation, an application is transmitted from the second electronic entity to the first electronic entity. The method further includes storing the application in the first electronic entity.

US 2005/0105734 A1 discloses a system and a method for providing an authorized user with access to secure services when a wireless token assigned to the user is in the proximity of a computing device through which access to the secured services is obtained.

### Brief Description of the Drawings

FIG. 1 is a schematic block diagram of a communications system in accordance with one example aspect.
FIG. 2 is a schematic block diagram of the communications system of FIG. 1 in accordance with another example aspect.
FIG. 3 is a flow diagram illustrating method aspects associated with the communications system of FIGS. 1 and 2.
FIGS. 4-8 are a series of front views of a mobile wireless communications device illustrating provisioning operations in accordance with an example embodiment.

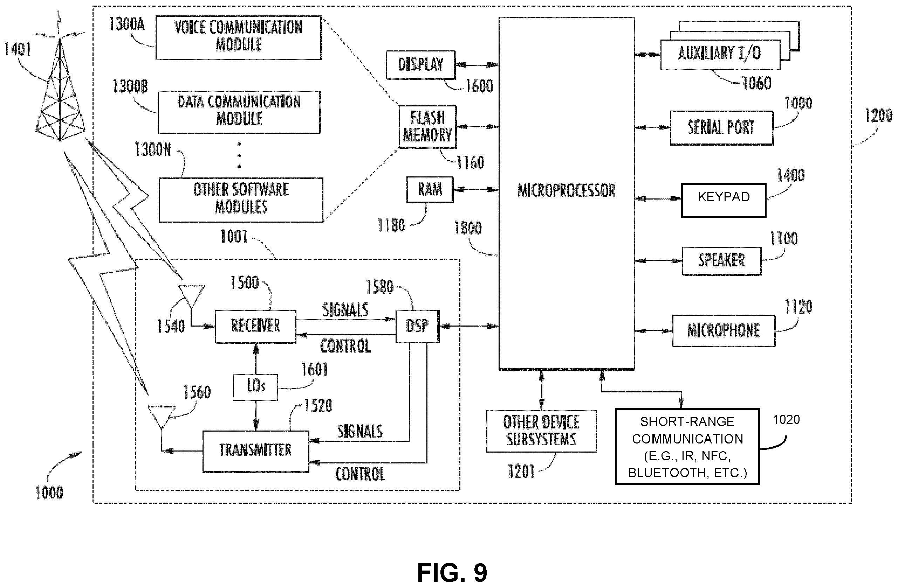

FIG. 9 is a schematic block diagram illustrating example mobile wireless communications device components that may be used with the mobile devices shown in FIGS. 1, 2, and 4-8.

### Detailed Description

The present description is made with reference to the accompanying drawings, in which embodiments are shown. The present invention is defined by the subject matter of the independent claims. Preferred embodiments are defined by the dependent claims.

Generally speaking, a mobile communications device is provided herein which may include a memory, a transceiver, and a controller coupled with the memory and the transceiver. The controller may be capable of receiving first authentication data from a security token via communication with the security token, where the first authentication data is associated with an account. The controller may also be capable of transmitting the first authentication data via the transceiver to an authentication server to request provisioning of the mobile device for emulating the security token, and receiving, responsive to the first authentication data, second authentication data via the transceiver from the authentication server, where the second authentication data is also associated with the account. The controller may be further capable of storing the second authentication data in the memory, and initiating a transaction request, without using the security token, by transmitting from the mobile device the transaction request using the second authentication data.

A related communications method for a mobile communications device, such as the one described briefly above, is also provided.

A related communications system is also provided and may include a security token, a server, and a mobile wireless communications device, such as the one described briefly above.

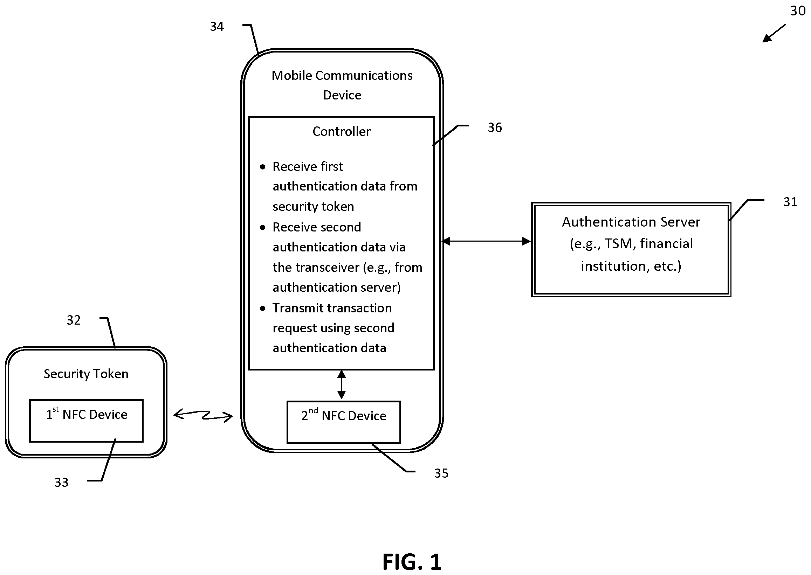

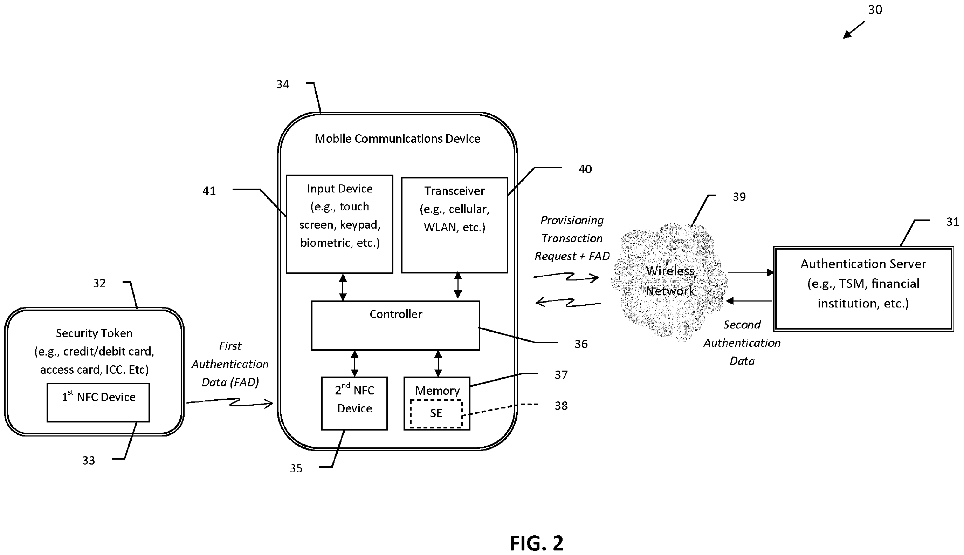

Referring initially to FIGS. 1 and 2, a communications system **30** illustratively includes an authentication server **31** configured to perform secure transactions based upon receiving authentication data, and a security token **32** comprising a first NFC device **33**. The security token **32** may be capable of providing first authentication data to the authentication server **31** to cause the authentication server **31** to perform a transaction, as will be discussed further below.

By way of background, NFC is a short-range wireless communications technology in which NFC-enabled devices are "swiped," "bumped" or otherwise moved in close proximity to communicate. In one non-limiting example implementation, NFC may operate at 13.56 MHz and with an effective range of several centimeters (typically up to about 4 cm, or up to about 10 cm, depending upon the given implementation), but other suitable versions of near field communication which may have different operating frequencies, effective ranges, etc., for example, may also be used.

In accordance with one example implementation, the authentication server **31** may comprise a secure payment server which is capable of performing secure payment transactions. For example, the authentication server **31** may be provided by a bank or financial institution for authorizing credit or debit transactions using an account, and the security token **32** may be a credit or debit card issued by the bank or financial institution and associated with the account. The security token **32** may be swiped at a NFC-enabled point of sale (POS) terminal, for example, which would communicate the appropriate authentication data from the security token **32** to the authentication server **31** so that the authentication server may authorize payment for the requested transaction from the account. More particularly, the first authentication data may include information such as credit card information, a primary account number (PAN), an expiration date, debit card information, gift card information, reward card information, a personal identification number (PIN), a cryptographic key, etc. In some embodiments, challenge-response data may be generated by the security token **32** using a cryptographic key, from which the authentication server may verify that the security token **32** is valid, for example.

Another example implementation of the security token **32** and authentication server **31** is for physical access applications. That is, the authentication server may be configured to perform a physical access security transaction, such as permitting access to a building, parking garage, or other secured area, based upon receiving the authentication data from the security token **32**. Still another example implementation is for access to or payment for transportation, such as subways, trains, busses, etc. In such embodiments the first authentication data would include the appropriate transportation card or physical access card information.

The system **30** further illustratively includes a mobile wireless communications device **34** (also referred to as a "mobile device" herein) comprising a second NFC device **35**, a memory **37**, a transceiver **40** (e.g., a cellular, WLAN, WiMAX, etc.), and an input device **41** (e.g., a touch screen, keypad, biometric sensor, buttons, etc.). The second NFC device **35**, memory **37**, transceiver **40**, and the input device **41** are coupled with a controller 36. Example mobile devices **34** may include portable or personal media players (e.g., music or MP3 players, video players, book readers, etc.), portable gaming devices, portable or mobile telephones, smartphones, portable computers such as tablet computers, digital cameras, etc. The controller **36** may be implemented using a processor and a computer-readable medium with computer-executable instructions configured to perform the various operations described herein, for example.

Generally speaking, the controller **36** may be provisioned to initiate secure transactions via NFC, such as payment or security transactions, in a similar manner to that described above for the security token **32**. This is sometimes referred to as a mobile wallet or an electronic ("e-wallet") configuration, allowing the mobile device **34** to be used similar to a credit card or security card that would ordinarily be carried in a wallet. In accordance with one embodiment, provisioning of the mobile device **34** or mobile wallet may include installing a secure applet on a secure element (SE) **38** defined on a memory **37** of the mobile device **34** (see FIG. 2), and personalizing the applet for a particular user account, such as through a trusted service manager (TSM). This may be done by accessing the authentication server **31** through a Web browser, for example, which in turn may cause a TSM to provision the mobile device **34** for the given type of transaction (e.g., payment, physical access, etc.). The TSM may be associated with the same financial institution, etc., as the authentication server **31**, or it may be associated with a different entity (e.g., a mobile device manufacturer or provider, a network carrier, etc.). The memory **37** may comprise a subscriber identity module (SIM) card, an electronic universal integrated circuit card (eUICC), a removable memory, an SD card, an embedded memory, etc., for example.

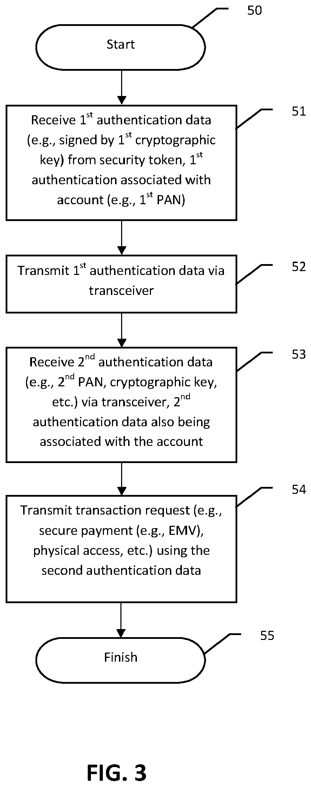

Referring additionally to FIG. 3, in the case of the security token **32**, the owner of the security token already has an established account associated with the security token. In accordance with an example embodiment, beginning at Block **50**, the mobile device **34** advantageously receives the first authentication data from the security token **32**, at Block **51**, and use this data for provisioning the mobile device **34** to perform the same type of transactions as the security token and using the same account associated with the security token. Stated alternatively, the mobile device **34** is advantageously provisioned to request transactions using the account just as if it were the security token **32** itself (i.e., using the same account associated with the security token), but without using the security token to initiate the transaction request.

This advantageously allows the mobile device **34** to be used for future transactions, without having to separately carry the security token **32**, and without having to issue a new account to the mobile device **34**, which may otherwise be a significant inconvenience to users. That is, the system **30** advantageously makes use of an existing security token **32** to relatively easily provision the mobile device **34** to initiate transactions based upon the same account already associated with the security token as part of the mobile device's e-wallet, and thus allowing users to not carry the physical security token if they so choose. Moreover, this may be particularly advantageous for financial institutions or security entities as well, as they may avoid the necessity to issue new security tokens **32** to customers after e-wallet provisioning, and may instead take advantage of existing security tokens. This, in turn, may save money and allow deployment in a relatively quick and convenient manner. Moreover, this may also help avoid the need to physically enter a bank or other location in person to provision the mobile device **34** with a payment or security card applet, or perform such provisioning via a website (and manually typing in information, etc.), both of which may be inconvenient and time consuming.

In an example embodiment, the mobile device **34** may be provisioned to initiate transactions for multiple security tokens **32**. For example, the mobile device **34** may be provisioned to perform transactions for which a debit card is needed, the mobile device **34** may be further provisioned to perform transactions for which a credit card is needed, and the mobile device **34** may be further provisioned to perform transactions for which an access control card is needed. In this example, the debit card, the credit card and the access control card need not be carried because after provisioning the mobile device **34** is capable of either emulating each of these cards, or using a same account associated with these cards in a similar manner.

More particularly, the controller **36** may receive the first authentication data from the security token **32** via NFC communication between the first NFC device **33** and the second NFC device **35**. However, it should be noted that other forms of communication between the mobile device **34** and the security token **32** may be used in some embodiments, such as radio frequency identification (RFID), WALN, infrared, wired connections, etc.). By way of example, the security token **32** may be swiped with, tapped against, or otherwise positioned in close proximity to the mobile device **34** to initiate NFC communication between the first NFC device **33** and the second NFC device **35**. The second NFC device **35** may be configured as an active NFC device **35** in that it generates a field to detect the presence of another NFC device within an effective NFC communication range. The effective NFC communication range may vary based upon the type of NFC communication format being used (e.g., A, B, F, etc.), as noted above. Moreover, the first NFC device **33** may be a passive NFC device in that it is powered by the field emitted from the second NFC device **35**, and therefore does not require a separate power source of its own. However, it should be noted that the first NFC device **33** may be active and the second NFC device **35** may be passive, or both may be active, in some embodiments.

The mobile device **34** may function as or simulates a POS or security terminal to the security token **32**, in that it prompts the security token **32** to provide the first authentication data, which the security token **32** would otherwise provide when initiating or requesting a secure transaction with the authentication server **31**. The controller **36** may then initiate or execute a transaction for provisioning purposes by transmitting the first authentication data to the authentication server **31** via the transceiver **40**, at Block **52**. For example, this transmission may take the form of a transaction request to the authentication server **31** against or on behalf of the security token **32**, similar to what a POS or security terminal would perform. In the example illustrated in FIG. 2, the controller **36** communicates with the authentication server **31** via a wireless communications network **39** (e.g., a cellular network, wireless LAN network, etc.), although in some embodiments this communication may occur through a wired connection as well.

The authentication server **31** may determine that the transmission from the mobile device **34** is not for the purpose of making a purchase, etc., but instead a request to provision the mobile device **34**, as will be described further below. As such, the authentication server **31** may verify that the information being presented by the mobile device **34** is the proper first authentication data associated with the security token **32**, similar to the way it would if the security token **32** was being used for a typical financial transaction, etc. This also confirms that the mobile device **34** requesting provisioning is in physical proximity of the security token **32**, which suggests that the user of the mobile device **34** possesses the security token **32** as well. That is, this prevents provisioning based upon stolen credit card numbers without physical possession of a respective physical credit card. As will be discussed further below, a further security measure of matching the registered user of the mobile device **34** with the registered credit card holder to make sure they are the same may also be performed, so that a physical credit card issued to a given user may only be used to provision the mobile device **34** for the same given user. As noted above, this process may involve back-and-forth communication for verification purposes, such as a challenge-response, etc.

As such, the authentication server **31** may provide, or cause a TSM to provide, second authentication data to the mobile device **34** that may be stored in the secure element **38** and used by the mobile device for requesting future transactions from the authentication server **31**, at Blocks **53-54**, which concludes the illustrated method (Block **55**). That is, the mobile device **34** may then initiate future payment (or security, transportation, etc.) transactions as if it were the security token **32** itself (i.e., using the same account already associated with the security token). It should be noted that, while the security token **32** and the mobile device **34** may both be associated with a same account, they do not have to have identical numbers associated therewith (although they may be identical in some embodiments). For example, the security token **32** may have a first PAN associated therewith, and the mobile device **34** may have a second PAN associated therewith, but both the first and second PANs may be associated with a same account at the given financial institution (e.g., both PANs are linked with a same user, family, etc., account, for example).

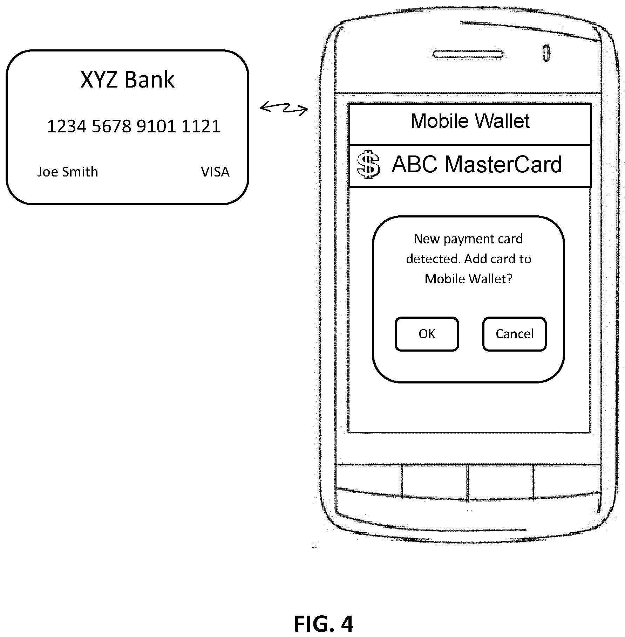

The foregoing will be further understood with reference to FIGS. 4-8 and an implementation example relating to secured payments. In the example, the security token **32** is a NFC-enabled VISA credit card issued by XYZ Bank to user Joe Smith. More particularly, the security token **32** is configured for secure payments in accordance with the Europay, MasterCard and VISA (EMV) standard, although other suitable payment or security formats besides EMV and payment card types may be used in various embodiments. Accordingly, the controller **36** may be configured to appear as an EMV-enabled POS terminal to the security token **32**, and the security token **32** will respond accordingly to the mobile device **34** as if the mobile device **34** were any other EMV POS terminal once NFC communication is initiated between the first NFC device **33** and the second NFC device **35**.

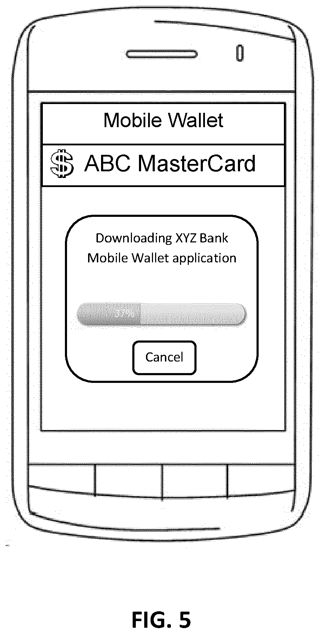

As shown in FIG. 4, the mobile device **34** illustratively includes a display **60**, which in the example is a touch screen display, although other suitable displays may be used in other embodiments. The controller **36** is running a mobile wallet application, which provides a graphical user interface (GUI) on the display **60**. In the mobile wallet, a first "soft" debit card is already provisioned, namely a debit credit card from ABC Bank. When the security token **32** and mobile device **34** commence NFC communications, the mobile wallet application determines that the security token **32** is a credit card that is not already provisioned with the mobile wallet, and provides a GUI prompt inquiring whether this new credit card is to be added to the mobile wallet. For example, the mobile wallet may determine, based upon an PAN number of the security token **32**, bank identification information, or other information stored on the security token **32** the type of credit card with which it is communicating. From this information, the mobile wallet may determine not only that the credit card is not already provisioned with the mobile wallet, but it may also determine a location (e.g., website, etc.) from which to download a mobile wallet interface application for the given credit card, as shown in FIG. 5.

For example, website addresses from which to download respective bank payment applications for the mobile wallet may be stored in a database on the mobile device **34**, or on a separate server with which the mobile device communicates. In accordance with another example, the appropriate website address for downloading the mobile wallet payment application may be stored on the security token **32** and provided to the mobile device **34** via NFC communication. In still another example embodiment, such applications may be stored on a central server which the mobile device **34** looks to for downloading interface applications whenever a new card is to be added to the mobile wallet.

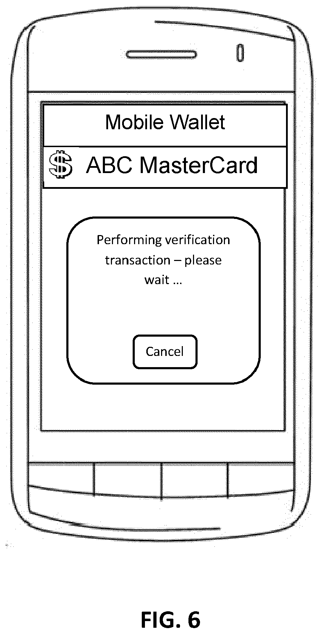

The installed mobile wallet interface application for the XYZ credit card may then initiate an EMV payment verification transaction with the authentication server **31** to download a secure payment applet for the secure element **38** (see FIG. 6). For example, the EMV transaction may be for a nominal or designated amount (e.g., 1 cent), for example, although in some embodiments a transaction amount is not required. That is, the transaction may be designated as a special provisioning request (either by a designated transaction amount or otherwise) that will be recognized by the authentication server **31**. The controller **36** receives the first authentication data and any other information typically provided by the security token **32** for payment transactions from the security token via NFC communication. In the example implementation, this information may be stored in the memory **37** (or a different device memory), and is designated as data set "A" herein. The data set A may be processed using a security algorithm (e.g., a hash algorithm), and a security key that is unique to the secure element **38** may be used to "sign" this data (e.g., as a media access control (MAC) data set), which is designated as data set "B" herein. The data set B may be used as an input for the secure element **38**.

Furthermore, an ID associated with the secure element **38** (designated as a data set "C") may be submitted by the controller **36** to the authentication server **31** along with the data sets A and B and the transaction request. The authentication server **31**, in conjunction with a mobile network carrier or mobile data service provider (e.g., the device manufacturer, etc.), where appropriate, may use the data set A to cryptographically ensure that the user of the mobile device **34** is the same user to which the security token **32** was issued. By way of example, this determination may be made based upon a phone number or IMEI number, in the case that the mobile device **34** is a mobile phone or cellular device. However, with other types of mobile devices (e.g., MP3 players, etc.), a unique identification (ID) associated with the mobile device may be used to determine a user associated with the mobile device (e.g., by communication between the mobile device **34** and an internet-connected computer, via a WLAN connection, etc.), and whether this is the same user to which the security token **32** was issued.

Moreover, with data sets B and C the authentication server **31** may cryptographically ensure that the user physically possessed the secure element **38** (i.e., the mobile device **34**) and the security token **32** at the time the security token **32** was scanned, as no other secure element would be able to produce the same output without having access to the given security token. This may be done with a relatively high degree of confidence that the authorized user possessed the physical security token **32**, and optionally that the user associated with mobile device **34** is the same user that is associated with the security token **32**.

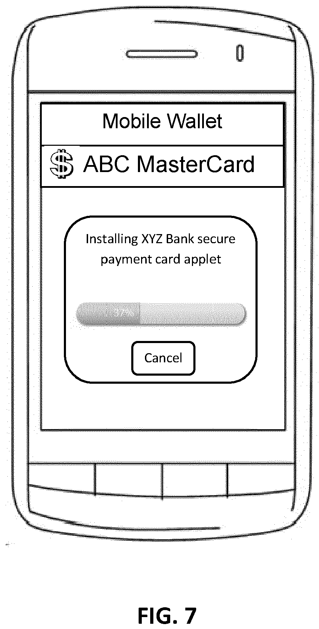

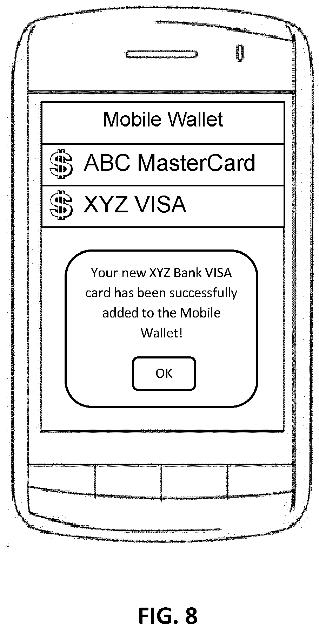

Once the new XYZ VISA payment card is provisioned with the mobile wallet (see FIG. 7), a user may proceed to make a payment by selecting this card from the mobile wallet GUI and bringing the mobile device **34** within NFC communication range of an NFC-enabled point-of-sale (POS) terminal **61**, as shown in FIG. 8. Here, the POS terminal **61** is associated with a merchant named Brown's Coffee Shop, and the mobile wallet displays a confirmation message via the GUI that a transaction for $10.75 from the XYZ Bank VISA account to Brown's Coffee Shop has been approved and completed by the authentication server **31**. The POS terminal **61** and the authentication server **31** may communicate over the internet via a wired or wireless network, for example.

Example components of a mobile wireless communications device **1000** that may be used in accordance with the above-described embodiments are further described below with reference to FIG. 4. The device **1000** illustratively includes a housing **1200**, a keyboard or keypad **1400** and an output device **1600**. The output device shown is a display **1600**, which may comprise a full graphic LCD. Other types of output devices may alternatively be utilized. A processing device **1800** is contained within the housing **1200** and is coupled between the keypad **1400** and the display **1600**. The processing device **1800** controls the operation of the display **1600**, as well as the overall operation of the mobile device **1000**, in response to actuation of keys on the keypad **1400**.

The housing **1200** may be elongated vertically, or may take on other sizes and shapes (including clamshell housing structures). The keypad may include a mode selection key, or other hardware or software for switching between text entry and telephony entry.

In addition to the processing device **1800**, other parts of the mobile device **1000** are shown schematically in FIG.4. These include a communications subsystem **1001**; a short-range communications subsystem **1020**; the keypad **1400** and the display **1600**, along with other input/output devices **1060**, **1080**, **1100** and **1120**; as well as memory devices **1160**, **1180** and various other device subsystems **1201**. The mobile device **1000** may comprise a two-way RF communications device having data and, optionally, voice communications capabilities. In addition, the mobile device **1000** may have the capability to communicate with other computer systems via the Internet.

Operating system software executed by the processing device **1800** is stored in a persistent store, such as the flash memory **1160**, but may be stored in other types of memory devices, such as a read only memory (ROM) or similar storage element. In addition, system software, specific device applications, or parts thereof, may be temporarily loaded into a volatile store, such as the random access memory (RAM) **1180**. Communications signals received by the mobile device may also be stored in the RAM **1180**.

The processing device **1800**, in addition to its operating system functions, enables execution of software applications **1300A-1300N** on the device 1000. A predetermined set of applications that control basic device operations, such as data and voice communications **1300A** and **1300B**, may be installed on the device 1000 during manufacture. In addition, a personal information manager (PIM) application may be installed during manufacture. The PIM may be capable of organizing and managing data items, such as e-mail, calendar events, voice mails, appointments, and task items. The PIM application may also be capable of sending and receiving data items via a wireless network **1401**. The PIM data items may be seamlessly integrated, synchronized and updated via the wireless network **1401** with corresponding data items stored or associated with a host computer system.

Communication functions, including data and voice communications, are performed through the communications subsystem **1001**, and possibly through the short-range communications subsystem. The communications subsystem **1001** includes a receiver **1500**, a transmitter **1520**, and one or more antennas **1540** and **1560**. In addition, the communications subsystem **1001** also includes a processing module, such as a digital signal processor (DSP) **1580**, and local oscillators (LOs) **1601**. The specific design and implementation of the communications subsystem **1001** is dependent upon the communications network in which the mobile device **1000** is intended to operate. For example, a mobile device **1000** may include a communications subsystem **1001** designed to operate with the Mobitex™, Data TAC™ or General Packet Radio Service (GPRS) mobile data communications networks, and also designed to operate with any of a variety of voice communications networks, such as AMPS, TDMA, CDMA, WCDMA, PCS, GSM, EDGE, etc. Other types of data and voice networks, both separate and integrated, may also be utilized with the mobile device **1000**. The mobile device **1000** may also be compliant with other communications standards such as 3GSM, 3GPP, UMTS, 4G, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore typically involves use of a subscriber identity module, commonly referred to as a SIM card, in order to operate on a GPRS network.

When required network registration or activation procedures have been completed, the mobile device **1000** may send and receive communications signals over the communication network **1401**. Signals received from the communications network **1401** by the antenna **1540** are routed to the receiver **1500**, which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560**.

In addition to processing communications signals, the DSP **1580** provides for control of the receiver **1500** and the transmitter **1520**. For example, gains applied to communications signals in the receiver **1500** and transmitter **1520** may be adaptively controlled through automatic gain control algorithms implemented in the DSP **1580**.

In a data communications mode, a received signal, such as a text message or web page download, is processed by the communications subsystem 1001 and is input to the processing device **1800**. The received signal is then further processed by the processing device **1800** for an output to the display **1600**, or alternatively to some other auxiliary I/O device **1060**. A device may also be used to compose data items, such as e-mail messages, using the keypad **1400** and/or some other auxiliary I/O device **1060**, such as a touchpad, a rocker switch, a thumb-wheel, or some other type of input device. The composed data items may then be transmitted over the communications network **1401** via the communications subsystem **1001**.

In a voice communications mode, overall operation of the device is substantially similar to the data communications mode, except that received signals are output to a speaker **1100**, and signals for transmission are generated by a microphone **1120**. Alternative voice or audio I/O subsystems, such as a voice message recording subsystem, may also be implemented on the device **1000**. In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, a Bluetooth™ communications module to provide for communication with similarly-enabled systems and devices, or a near field communications (NFC) sensor for communicating with a NFC device or NFC tag via NFC communications.

## Claims

1. A mobile communications device (34) comprising:
a memory (37);
a transceiver (40); and
a controller (36) coupled with the memory and the transceiver, the controller being capable of
receiving first authentication data from a security token (32) via communication with the security token, the first authentication data being associated with an account,
transmitting the first authentication data via the transceiver to an authentication server to request provisioning of the mobile device for emulating the security token,
receiving, responsive to the first authentication data, second authentication data via the transceiver from the authentication server, the second authentication data being associated with the account,
storing the second authentication data in the memory, and
initiating a transaction request, without using the security token, by transmitting from the mobile device the transaction request using the second authentication data.

2. The mobile communications device of Claim 1 further comprising a near field communication "NFC" device (35) coupled with the controller; and wherein the controller is capable of receiving the first authentication data through NFC communication with the security token via the NFC device.

3. The mobile communications device of Claim 1 wherein the memory comprises a secure element (38).

4. The mobile communications device of Claim 1 wherein the transaction request comprises a secure payment transaction request.

5. The mobile communications device of Claim 1 wherein the transaction request comprises an EMV "Europay, Mastercard and Visa" transaction request.

6. The mobile communications device of Claim 1 wherein the transaction request comprises a physical access transaction request.

7. The mobile communications device of Claim 1 wherein the first authentication data comprises a first primary account number "PAN"; wherein the second authentication data comprises a second PAN different than the first PAN; and wherein the first PAN and the second PAN are both associated with the account.

8. The mobile communications device of Claim 1 wherein the second authentication data comprises a cryptographic key.

9. A communications method for a mobile communications device (34) comprising a memory (37) and a transceiver (40), the method comprising:
receiving (51) first authentication data from a security token (32) via communication with the security token, the first authentication data being associated with an account;
transmitting (52) the first authentication data via the transceiver to an authentication server to request provisioning of the mobile device for emulating the security token;
receiving (53) , responsive to the first authentication data, second authentication data via the transceiver from the authentication server, the second authentication data being associated with the account;
storing the second authentication data in the memory; and
initiating (54) a transaction request, without using the security token, by transmitting from the mobile device the transaction request using the second authentication data.

10. The method of Claim 9 wherein the mobile communications device further comprises a near field communication "NFC" device (35); and wherein receiving the first authentication data comprises receiving the first authentication data through NFC communication with the security token via the NFC device.

11. The method of Claim 9 wherein the memory comprises a secure element (38).

12. The method of Claim 9 wherein the transaction request comprises a secure payment transaction request.

13. The method of Claim 9 wherein the transaction request comprises an EMV "Europay, Mastercard and Visa" transaction request.

14. The method of Claim 9 wherein the transaction request comprises a physical access transaction request.

15. A communications system (30) comprising:
a security token (32) having first authentication data associated therewith, the authentication data being associated with an account;
a server (31); and
a mobile wireless communications device (34) comprising
a memory (37),
a transceiver (40), and
a controller (36) coupled with the memory and the transceiver, the controller being capable of
receiving the first authentication data from the security token via communication with the security token,
transmitting the first authentication data via the transceiver to the server to an authentication server to request provisioning of the mobile device for emulating the security token,
receiving, responsive to the first authentication data, second authentication data via the transceiver from the server, the second authentication data being associated with the account,
storing the second authentication data in the memory, and
initiating a transaction request, without using the security token, by transmitting from the mobile device the transaction request to the server using the second authentication data.

## Patentansprüche

1. Tragbare Kommunikationsvorrichtung (34), die Folgendes umfasst:
einen Speicher (37);
einen Transceiver (40) und
eine Steuereinheit (36), die mit dem Speicher und dem Transceiver gekoppelt ist, wobei die Steuereinheit zu Folgendem fähig ist:
Empfangen von ersten Authentifizierungsdaten von einem Sicherheitstoken (32) mittels einer Kommunikation mit dem Sicherheitstoken, wobei die ersten Authentifizierungsdaten mit einem Konto assoziiert sind,
Übertragen der ersten Authentifizierungsdaten mittels des Transceivers an einen Authentifizierungsserver, um die Bereitstellung der tragbaren Vorrichtung zum Emulieren des Sicherheitstokens anzufordern,
als Reaktion auf die ersten Authentifizierungsdaten Empfangen von zweiten Authentifizierungsdaten mittels des Transceivers von dem Authentifizierungsserver, wobei die zweiten Authentifizierungsdaten mit dem Konto assoziiert sind,
Speichern der zweiten Authentifizierungsdaten in dem Speicher und
Initiieren einer Transaktionsanforderung ohne Verwendung des Sicherheitstokens durch Übertragen der Transaktionsanforderung von der tragbaren Vorrichtung unter Verwendung der zweiten Authentifizierungsdaten.

2. Tragbare Kommunikationsvorrichtung nach Anspruch 1, die weiterhin eine Nahfeldkommunikationsvorrichtung, "NFC"-Vorrichtung, (35) umfasst, die mit der Steuereinheit gekoppelt ist; und wobei die Steuereinheit dazu fähig ist, die ersten Authentifizierungsdaten durch eine NFC-Kommunikation mit dem Sicherheitstoken mittels der NFC-Vorrichtung zu empfangen.

3. Tragbare Kommunikationsvorrichtung nach Anspruch 1, wobei der Speicher ein sicheres Element (38) umfasst.

4. Tragbare Kommunikationsvorrichtung nach Anspruch 1, wobei die Transaktionsanforderung eine sichere Zahlungstransaktionsanforderung umfasst.

5. Tragbare Kommunikationsvorrichtung nach Anspruch 1, wobei die Transaktionsanforderung eine EMV-Transaktionsanforderung, "Europay-, Mastercard- und Visa"-Transaktionsanforderung, umfasst.

6. Tragbare Kommunikationsvorrichtung nach Anspruch 1, wobei die Transaktionsanforderung eine physische Zugangstransaktionsanforderung umfasst.

7. Tragbare Kommunikationsvorrichtung nach Anspruch 1, wobei die ersten Authentifizierungsdaten eine erste primäre Kontonummer "PAN" umfassen; wobei die zweiten Authentifizierungsdaten eine zweite PAN umfassen, die sich von der ersten PAN unterscheidet; und wobei die erste PAN und die zweite PAN beide mit dem Konto assoziiert sind.

8. Tragbare Kommunikationsvorrichtung nach Anspruch 1, wobei die zweiten Authentifizierungsdaten einen kryptographischen Schlüssel umfassen.

9. Kommunikationsverfahren für eine tragbare Kommunikationsvorrichtung (34), die einen Speicher (37) und einen Transceiver (40) umfasst, wobei das Verfahren Folgendes umfasst:
Empfangen (51) von ersten Authentifizierungsdaten von einem Sicherheitstoken (32) mittels einer Kommunikation mit dem Sicherheitstoken, wobei die ersten Authentifizierungsdaten mit einem Konto assoziiert sind;
Übertragen (52) der ersten Authentifizierungsdaten mittels des Transceivers an einen Authentifizierungsserver, um die Bereitstellung der tragbaren Vorrichtung zum Emulieren des Sicherheitstokens anzufordern;
als Reaktion auf die ersten Authentifizierungsdaten Empfangen (53) von zweiten Authentifizierungsdaten mittels des Transceivers von dem Authentifizierungsserver, wobei die zweiten Authentifizierungsdaten mit dem Konto assoziiert sind;
Speichern der zweiten Authentifizierungsdaten in dem Speicher und
Initiieren (54) einer Transaktionsanforderung ohne Verwendung des Sicherheitstokens durch Übertragen der Transaktionsanforderung von der tragbaren Vorrichtung unter Verwendung der zweiten Authentifizierungsdaten.

10. Verfahren nach Anspruch 9, wobei die tragbare Kommunikationsvorrichtung weiterhin eine Nahfeldkommunikationsvorrichtung, "NFC"-Vorrichtung, (35) umfasst und wobei das Empfangen der ersten Authentifizierungsdaten das Empfangen der ersten Authentifizierungsdaten durch eine NFC-Kommunikation mit dem Sicherheitstoken mittels der NFC-Vorrichtung umfasst.

11. Verfahren nach Anspruch 9, wobei der Speicher ein sicheres Element (38) umfasst.

12. Verfahren nach Anspruch 9, wobei die Transaktionsanforderung eine sichere Zahlungstransaktionsanforderung umfasst.

13. Verfahren nach Anspruch 9, wobei die Transaktionsanforderung eine EMV-Transaktionsanforderung, "Europay-, Mastercard- und Visa"-Transaktionsanforderung, umfasst.

14. Verfahren nach Anspruch 9, wobei die Transaktionsanforderung eine physische Zugangstransaktionsanforderung umfasst.

15. Kommunikationssystem (30), das Folgendes umfasst:
ein Sicherheitstoken (32), das damit assoziierte erste Authentifizierungsdaten aufweist, wobei die Authentifizierungsdaten mit einem Konto assoziiert sind;
einen Server (31) und
eine tragbare drahtlose Kommunikationsvorrichtung (34), die Folgendes umfasst:
einen Speicher (37),
einen Transceiver (40) und
eine Steuereinheit (36), die mit dem Speicher und dem Transceiver gekoppelt ist, wobei die Steuereinheit zu Folgendem fähig ist:
Empfangen der ersten Authentifizierungsdaten von dem Sicherheitstoken mittels einer Kommunikation mit dem Sicherheitstoken,
Übertragen der ersten Authentifizierungsdaten mittels des Transceivers an den Server an einen Authentifizierungsserver, um die Bereitstellung der tragbaren Vorrichtung zum Emulieren des Sicherheitstokens anzufordern,
als Reaktion auf die ersten Authentifizierungsdaten Empfangen von zweiten Authentifizierungsdaten mittels des Transceivers von dem Server, wobei die zweiten Authentifizierungsdaten mit dem Konto assoziiert sind,
Speichern der zweiten Authentifizierungsdaten in dem Speicher und
Initiieren einer Transaktionsanforderung ohne Verwendung des Sicherheitstokens durch Übertragen der Transaktionsanforderung von der tragbaren Vorrichtung an den Server unter Verwendung der zweiten Authentifizierungsdaten.

## Revendications

1. Dispositif de communication mobile (34) comprenant :
une mémoire (37) ;
un émetteur-récepteur (40) ; et
un contrôleur (36) couplé à la mémoire et à l'émetteur-récepteur, le contrôleur étant capable de :
recevoir des premières données d'authentification en provenance d'un jeton de sécurité (32), par communication avec le jeton de sécurité, les premières données d'authentification étant associées à un compte ;
émettre les premières données d'authentification via l'émetteur-récepteur vers un serveur d'authentification, afin de demander de configurer le dispositif mobile en vue d'émuler le jeton de sécurité ;
en réponse à l'envoi des premières données d'authentification, recevoir du serveur d'authentification des secondes données d'authentification via l'émetteur-récepteur, les secondes données d'authentification étant associées au compte ;
enregistrer les secondes données d'authentification dans la mémoire ; et
lancer une demande d'opération sans utiliser le jeton de sécurité, en émettant la demande de transaction par le dispositif mobile à l'aide des secondes données d'authentification.

2. Dispositif de communication mobile selon la revendication 1, comprenant en outre un dispositif de communication en champ proche, NFC pour *« Near Field Communication* », (35) couplé au contrôleur et dans lequel le contrôleur est capable de recevoir les premières données d'authentification via une communication NFC avec le jeton de sécurité, via le dispositif NFC.

3. Dispositif de communication mobile selon la revendication 1, dans lequel la mémoire comprend un élément sécurisé (38).

4. Dispositif de communication mobile selon la revendication 1, dans lequel la demande d'opération consiste en une demande d'opération de paiement sécurisée.

5. Dispositif de communication mobile selon la revendication 1, dans lequel la demande d'opération consiste en une demande d'opération EMV, pour « *Europay*, *Mastercard and Visa ».*

6. Dispositif de communication mobile selon la revendication 1, dans lequel la demande d'opération consiste en une demande d'opération avec accès physique.

7. Dispositif de communication mobile selon la revendication 1, dans lequel les premières données d'authentification consistent en un premier numéro primaire de compte, PAN pour « *Primary Account Number* » ; dans lequel les secondes données d'authentification consistent en un second numéro PAN, différent du premier numéro PAN ; et dans lequel le premier numéro PAN et le second numéro PAN sont tous deux associés au compte.

8. Dispositif de communication mobile selon la revendication 1, dans lequel les secondes données d'authentification consistent en une clef cryptographique.

9. Procédé de communication pour un dispositif de communication mobile (34) comprenant une mémoire (37) et un émetteur-récepteur (40), le procédé comprenant les étapes consistant à :
recevoir (51) des premières données d'authentification en provenance d'un jeton de sécurité (32), par communication avec le jeton de sécurité, les premières données d'authentification étant associées à un compte ;
émettre (52) les premières données d'authentification via l'émetteur-récepteur vers un serveur d'authentification, afin de demander de configurer le dispositif mobile afin d'émuler le jeton de sécurité ;
en réponse à l'envoi des premières données d'authentification, recevoir (53) du serveur d'authentification des secondes données d'authentification via l'émetteur-récepteur, les secondes données d'authentification étant associées au compte ;
enregistrer les secondes données d'authentification dans la mémoire ; et
lancer (54) une demande d'opération sans utiliser le jeton de sécurité, en émettant la demande de transaction par le dispositif mobile à l'aide des secondes données d'authentification.

10. Procédé selon la revendication 9, dans lequel le dispositif de communication mobile comprend en outre un dispositif de communication en champ proche, NFC pour « *Near Field Communication* », (35) ; et dans lequel l'étape de réception des premières données d'authentification comprend l'étape consistant à recevoir les premières données d'authentification via une communication NFC avec le jeton de sécurité, via le dispositif NFC.

11. Procédé selon la revendication 9, dans lequel la mémoire comprend un élément sécurisé (38).

12. Procédé selon la revendication 9, dans lequel la demande d'opération consiste en une demande d'opération de paiement sécurisée.

13. Procédé selon la revendication 9, dans lequel la demande d'opération consiste en une demande d'opération EMV, pour « *Europay, Mastercard and Vissa ».*

14. Procédé selon la revendication 9, dans lequel la demande d'opération consiste en une demande d'opération avec accès physique.

15. Système de communication (30) comprenant :
un jeton de sécurité (32) possédant des premières données d'authentification qui lui sont associés, les données d'authentification étant associées à un compte ;
un serveur (31) ; et
un dispositif de communication mobile (34) comprenant :
une mémoire (37) ;
un émetteur-récepteur (40) ; et
un contrôleur (36) couplé à la mémoire et à l'émetteur-récepteur, le contrôleur étant capable de :
recevoir les premières données d'authentification en provenance d'un jeton de sécurité (32), par communication avec le jeton de sécurité ;
émettre les premières données d'authentification via l'émetteur-récepteur vers le serveur, un serveur d'authentification, afin de demander de configurer le dispositif mobile afin d'émuler le jeton de sécurité ;
en réponse à l'envoi des premières données d'authentification, recevoir du serveur d'authentification des secondes données d'authentification via l'émetteur-récepteur, les secondes données d'authentification étant associées au compte ;
enregistrer les secondes données d'authentification dans la mémoire ; et
lancer une demande d'opération sans utiliser le jeton de sécurité, en émettant la demande de transaction par le dispositif mobile vers le serveur à l'aide des secondes données d'authentification.
